# EUROPEAN PATENT APPLICATION

(11) **EP 4 443 773 A1**
(43) Date of publication of application: **09.10.2024**
(21) Application number: 23219557.8
(22) Date of filing: 21.12.2023
(51) Int. Cl.: H04B 10/70, G02B 6/126, H04J 14/06

(54) **A COMBINING UNIT**

(30) Priority: 04.04.2023 GB 202304984
(71) Applicant: KABUSHIKI KAISHA TOSHIBA, Minato-ku Tokyo 105-8001 (JP)
(72) Inventor: PERUMANGATT, Chithrabhanu, Cambridge, CB4 0GZ (GB); PARAISO, Taofiq, Cambridge, CB4 0GZ (GB); ROGER, Thomas, Cambridge, CB4 0GZ (GB); SINGH, Ravinder, Cambridge, CB4 0GZ (GB); SHIELDS, Andrew James, Cambridge, CB4 0GZ (GB)
(74) Representative: Marks & Clerk LLP

(57) **Abstract**

A combining unit combining a plurality of optical inputs into a single optical output, the combining unit comprising:
a photonic integrated circuit comprising:
a plurality of low birefringence waveguides 'LBW', each LBW coupled to an optical input of the plurality of optical inputs; and
at least one low birefringence coupler 'LBC', coupled to the plurality of LBWs and coupled to the single optical output to combine optical signals received at the plurality of optical inputs into an output optical signal.

## Description

### FIELD OF INVENTION

Embodiments described herein relate to a combining unit and a quantum communication system and method.

### BACKGROUND

In a quantum communication system, information is sent between a transmitter and a receiver by encoded single quanta, such as single photons. Each photon carries one bit of information which can be encoded upon a property of the photon, such as its polarization.

Quantum key distribution (QKD) is a technique which results in the sharing of cryptographic keys between two parties: a transmitter often referred to as "Alice"; and a receiver often referred to as "Bob". The attraction of this technique is that it provides a test of whether any part of the key can be known to an unauthorised eavesdropper, often referred to as "Eve". In many forms of quantum key distribution, Alice and Bob use two or more non-orthogonal bases in which to encode the bit values. The laws of quantum mechanics dictate that an unknown quantum state cannot be cloned without introducing errors on the copy. The measurement of the photons by Eve, without prior knowledge of the encoding basis of each, causes an error in the estimation of the encoded symbol. When she resends the photon to Bob, the state may no longer be the same as originally sent by Alice and will cause error in the final bit values shared between Alice and Bob. By comparing a part of their common bit string, Alice and Bob can thus quantify how much information was gained by Eve.

### BRIEF DESCRIPTION OF THE FIGURES

Embodiments of the invention will now be described by way of example with reference to the accompanying drawings.
Figure 1 is a schematic of a combining unit in accordance with an embodiment.
Figures 2A and 2B are schematics of combining units in accordance with some embodiments.
Figure 3 is a transmitter in accordance with an embodiment.
Figure 4 is a cross section of a first end and a second end of a fiber assembly in accordance with an embodiment.
Figure 5 is a schematic of a light source in accordance with an embodiment.
Figure 6 is a schematic of a light source in accordance with an embodiment.
Figure 7A is a schematic of a transmitter in accordance with an embodiment.
Figure 7B is a cross section of an end of a light source in accordance with an embodiment.
Figure 8 is a schematic of a quantum communication system in accordance with an embodiment.

### DETAILED DESCRIPTION

Various aspects and embodiments are set out in the appended claims.

In an embodiment, there is provided a combining unit combining a plurality of optical inputs into a single optical output, the combining unit comprising:
a photonic integrated circuit comprising:
a plurality of low birefringence waveguides `LBW', each LBW coupled to an optical input of the plurality of optical inputs; and
at least one low birefringence coupler `LBC', coupled to the plurality of LBWs and coupled to the single optical output to combine optical signals received at the plurality of optical inputs into an output optical signal.

Information can be encoded by modulating the optical polarisation state and in practical applications the states may be chosen from the following mutually unbiased bases which comprise two orthogonal basis states. These may be the rectilinear linear polarisation states, horizontal "H" and vertical "V", which are oriented at angle 0 degrees and 90 degrees respectively and the mutually unbiased basis which contain the diagonal linear polarisation states, diagonal "D" and anti-diagonal "A", oriented at 45 degrees and -45 degrees respectively.

In embodiments of a quantum communication system, quantum information may be encoded onto single quanta such as photons using polarisation bases. Photons are transmitted through optical components within optical devices such as quantum encoders and quantum decoders, and across quantum communication channels in free-space, in optical fibers or on-chip. Polarised photons may also be combined together within optical devices to generate further polarisation states.

Embodiments described herein facilitate communication of quantum information with improved stability, low footprint and with precise alignment to ensure indistinguishability of encoded photons.

The use of the disclosed photonic integrated circuit, that optically confines received light pulses within waveguides, provides improved alignment precision. The use of waveguides and couplers that are specifically polarisation independent waveguides results in a more stable polarisation state.

The embodiments disclosed herein provide improved alignment as compared to free-space optical combiners. Free-space combiners require very precise mechanical alignment of lasers and optical beams to ensure indistinguishability. The embodiments described herein also provide improvements over fiber-based optical combiners, which may introduce polarisation changes due to birefringence present in the fibers and the mechanical rotation of the fibers. Both free-space optical combiners and fiber-based optical combiners require a large footprint (including from the provision of multiple bulky components in free space or use of multiple fibers and connectors).

In an embodiment, there is provided a combining unit as described above,
wherein the plurality of optical inputs comprises at least three optical inputs,
wherein the at least one LBC comprises a plurality of LBCs arranged in sequential coupling stages,
wherein the coupling stages comprise a final stage and at least one preceding stage, the final stage having an output LBC coupled to the single optical output and the at least one preceding stage having at least one LBC configured to combine a first input and a second input into a single LBC output coupled to an input of a following stage.

In an embodiment there is provided a transmitter, the transmitter comprising:
a combining unit as described above, and
a light source having a plurality of outputs, each output coupled to an optical input of the plurality of optical inputs,
wherein the light source configured to output pulses light at a first wavelength at each of the plurality of outputs.

In an embodiment, the light source is configured to receive at least one control signal to modulate the polarisation of the polarised light output at each of the plurality of outputs.

In embodiments, the combining units described above further comprise a fiber array comprising:
a plurality of polarisation maintaining optical fibers, hereafter PMFs, each PMF being coupled to an optical input of the plurality of optical inputs of the combining unit;
wherein each PMF comprises a fast optical axis and a slow optical axis, wherein the plurality of PMFs are rotated with respect to one another by a non-zero angle.

In an embodiment, the plurality of optical inputs comprises four optical inputs and the plurality of PMFs include four PMFs.

In embodiments, there is described a transmitter, the transmitter comprising:
a combining unit as described above; and
a light source having a plurality of outputs, each output coupled to a PMF of the fiber array, wherein the light source configured to output pulses of light at a first wavelength at each of the plurality of outputs.

The light source may comprises a plurality of lasers, each laser of the plurality of lasers coupled to an output of the plurality of outputs.

In embodiments, each laser of the plurality of lasers is configured to receive a control signal to modulate the intensity of the laser.

In some embodiments, the light source comprises:
a laser;
an output intensity modulator coupled to the laser and configured to modulate an output of the laser;
a plurality of intensity modulators, each intensity modulator coupled to an output of the plurality of outputs and configured to transmit or block the output of light at the output in response to a control signal.

In some embodiments, the light source further comprises a plurality of phase modulators, each phase modulator coupled to a respective intensity modulator of the plurality of intensity modulators and configured to adjust the phase of received light in response to a control signal.

In some embodiments, the light source produces light pulses as a sequence of pulses.

In some embodiments, the light source produces light pulses having a mean photon number of < 1.

In some embodiments the single optical output of the combining unit is coupled to a free-space output, or wherein the single-mode optical output is coupled a single-mode optical fiber and the transmitter optionally comprises one or more birefringent elements coupled to an output of the single-mode optical fiber.

In some embodiments, there is described a quantum encoder comprising a transmitter as described above.

In some embodiments, there is described a quantum communication system comprising a quantum encoder as described above and a quantum decoder.

In some embodiments there is described a method for combining a plurality of optical inputs into a single optical output, comprising:
providing an optical input of the plurality of optical inputs to one of a plurality of low birefringence waveguides, hereafter LBWs;
providing an output of the plurality of LBWs to at least one low birefringence coupler, hereafter LBC, the inputs of the at least one LBC coupled to the plurality of LBWs and the output of the at least one LBC coupled to the single optical output.

In some embodiments, there is described a method of generating a polarisation encoded signal, comprising:
generating a plurality of light pulses;
directing the plurality of light pulses into a fiber array, the fiber array comprising a plurality of polarisation maintaining optical fibers, hereafter PMFs, wherein each PMF comprises a fast optical axis and a slow optical axis, wherein the plurality of PMFs are rotated with respect to one another by a non-zero angle, such that the fiber array outputs a plurality of polarised pulses; and
combining the outputs of the plurality of PMFs according to the method described above

In some embodiments there is described a method of generating a polarisation encoded signal, comprising:
generating a plurality of polarised light pulses;
combining the polarised light pulses according to the method described above.

In some embodiments there is described a method of quantum communication, comprising:
generating a polarisation encoded signal according to claim 18 or claim 19, wherein the polarised pulses output from the PMFs are randomly selected from states in two polarisation bases;
receiving at a receiver the polarisation encoded signal;
decoding the received polarisation encoded signals in a basis of the two polarisation bases.

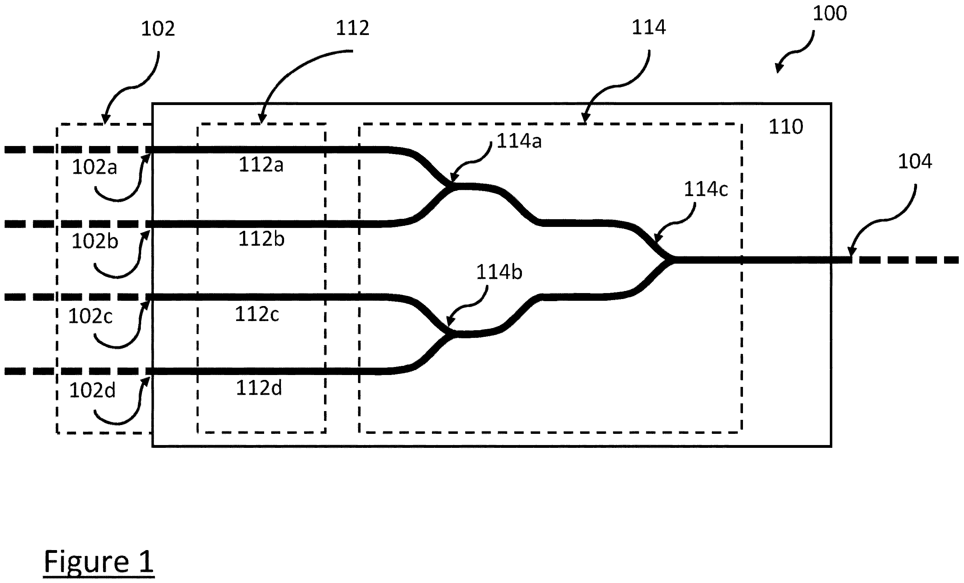

Figure 1 illustrates a combining unit 100. Combining unit 100 is configured to combine a plurality of optical inputs 102 into a single optical output 104, thus operating as a multiplexer of input optical signals. Figure 1 shows four optical inputs 102a-102d, but the number is not limited to four. The number may be larger (e.g. 8) or smaller, and at least two.

The combining unit 100 comprises a photonic integrated circuit (PIC) 110. The PIC 110 comprises a plurality of waveguides 112 having a low birefringence, hereafter 'low birefringence waveguides', or 'LBWs'. Examples of low birefringence waveguides include an optically isotropic waveguide, being a waveguide that comprises a material that is optically isotropic (i.e. the refractive index is the same in all directions within the material). Further examples include a waveguide having uniaxial birefringence. In this example, the refractive index is equal in all directions orthogonal to the direction of the optic axis, where this optic axis is aligned with the direction of light propagation within the waveguide. A further example is a waveguide having a birefringence of < 5 × 10⁻⁵ in the directions orthogonal to the optic axis. Each LBW, having low birefringence, is configured to propagate light without axis or phase rotation, or with minimal axis or phase rotation. Thus, an LBW will preserve the polarisation of a light pulse of any given polarisation that enters the LBW. Each LBW may be formed of a low birefringent material and having circularly symmetric cross-section. LBWs may be fabricated by layer deposition on a substrate, or may be formed by directional laser writing onto a glass substrate. When forming the waveguide, the internal stress of the waveguide is minimised to maintain the low birefringence in the formed waveguide. Stress reducing methods include avoiding sharp changes of direction, avoiding sharp edges at waveguide sidewalls or using controlled multimode waveguides.

Each LBW is coupled to an optical input of the plurality of optical inputs 102. Figure 1 shows four LBWs 112a-112d, each respectively coupled to the four optical inputs 102a-102d, but in other embodiments the number may be different, and is at least two. The number of LBWs 112 may correspond to the number of optical inputs 102. The PIC 110 further comprises at least one coupler having low birefringence, hereafter a low birefringence coupler, or `LBC' 114. Each LBC, having low birefringence, is configured to propagate and couple light without axis or phase rotation, or with minimal axis or phase rotation. Thus, an LBC will preserve the polarisation of a light pulse of any given polarisation that enters the LBC.

The at least one LBC is coupled to the plurality of LBWs 112 and coupled to the single optical output 104 to combine optical signals received at the plurality of optical inputs 102 into an output optical signal. Each LBC may be a 2x1 beam combiner that combines input pulses into a pulse at an output port. An LBC may be formed from the same materials used to form the LBWs described above. For example, an LBC from joining the ends of three LBWs together, with two of the LBWs forming the input branches and a third LBW forming the output branch. The symmetry of the LBWs forming the LBCs is maintained during the forming process - for example, the LBWs are bent and coupled together under conditions of low stress to maintain the low birefringence in the components of the LBC.

Due to the LBWs and the LBCs, the PIC is able to receive a light input of arbitrary polarisation, at any of the plurality of optical inputs 102, and transmit the light input to the single output while maintaining the arbitrary polarisation.

The combining unit 100 of Figure 1 is a combining unit configured to couple four optical inputs to one optical output, with the combining unit comprising three LBCs. Such a combining unit may be applied to a quantum key distribution application where the combining unit receives pulses encoded in a state in the {H, V} basis or in the {D, A} basis, where each optical input is configured to receive an optical pulse in a different polarisation basis. For example, this combining unit may be used to receive and combine pulses encoded in the 4-state BB84 protocol.

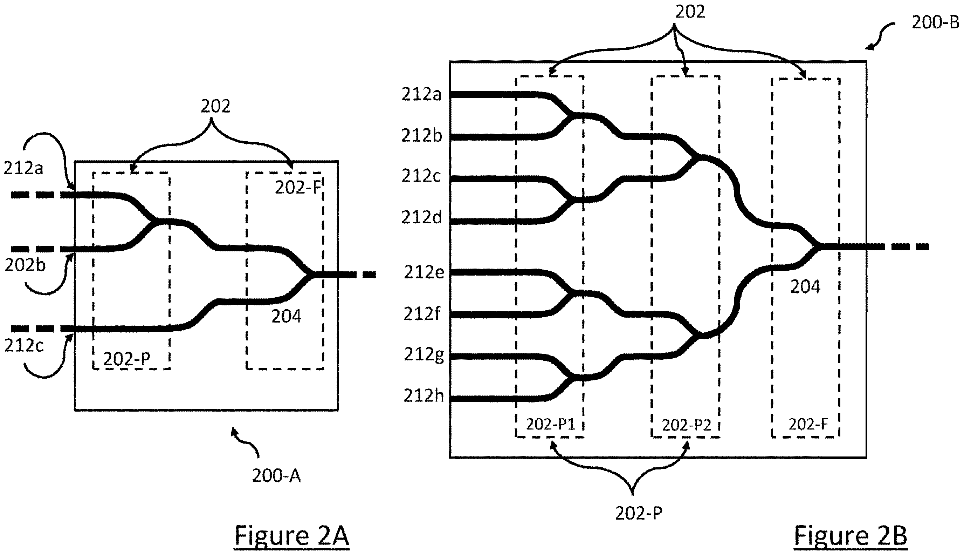

In other embodiments, the combining unit may include a different number of optical inputs, LBWs and LBCs may be provided. Figures 2A and 2B illustrate two example embodiments. In Figure 2A, combining unit 200-A couples three optical inputs to one optical output. In Figure 2B, combining unit 200-B couples eight optical inputs to one optical output. In general, the plurality of optical inputs 102 may comprise at least three optical inputs, and the at least one LBC comprises a plurality of LBCs arranged in sequential coupling stages 202. The coupling stages comprise a final stage 202-F and at least one preceding stage 202-P. The final stage comprises an output LBC 204 coupled to the single optical output and the at least one preceding stage 202-P. The at least one preceding stage includes at least one LBC, each LBC configured to combine a first input and a second input into a single LBC output. The single LBC output is then coupled to an input of a following stage.

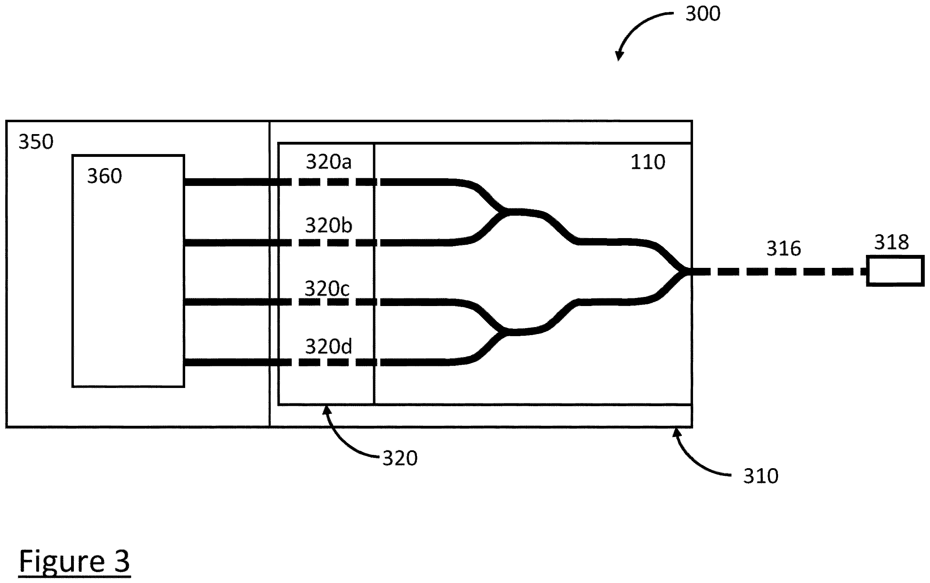

In the example of Figure 2A, the combining unit 200-A includes only one preceding stage configured to receive and couple two of the optical inputs 212a and 212b to an input of the LBC 204 of the final stage 202-F, via LBWs. A third optical input 212c of the combining unit 200-A is coupled to the input of the LBC 204. The combining unit 200-A of Figure 3A may be applied to a quantum key distribution application where the combining unit receives pulses encoded in a state in the {H, V} basis or in the {D, A} basis, where each optical input is configured to receive an optical pulse one of three states in the two polarisation bases. For example, this combining unit may be used to receive and combine encoded in the 3-state BB84 protocol.

In the example of Figure 2B, the combining unit 200-B includes two preceding stages 202-P1 and 202P-2. The first preceding stage 202-P1 is configured to receive and couple the eight optical inputs 212a-212h to the inputs of four LBCs located in the first stage 202-P1. The outputs of the four LBCs are then coupled to the inputs of two LBCs located in the second stage 202-P2. The outputs of the two LBCs are then coupled to the inputs of the LBC 204 in the final stage 202-F. The combining unit 200-A of Figure 3A may be applied to a quantum key distribution application where the combining unit receives pulses encoded by polarisation of light. For example, the pulses may be encoded in one of eight possible states, such as states in the in the {H, V} basis, {D, A} basis, and two additional orthonormal bases (for example, orthonormal bases corresponding to {H, V} basis, {D, A} basis, with each base rotated by a further amount δ rad). For example, this combining unit may be used to receive and combine encoded in QKD protocols using more than four states (e.g. 6-state or 8-state BB84).

Alternatively, the pulses may be encoded only in a state in the {H, V} basis, {D, A} basis, but each optical input may be configured to receive pulses of different intensities. For example, four optical inputs 212a-212d may be configured to receive pulses encoded in the {H, V} basis and {D, A} basis at a first intensity, and four optical inputs 212a-212d may be configured to receive pulses encoded in the {H, V} basis and {D, A} basis at a second intensity.

In some embodiments, each combining unit 200 may include additional LBWs. For example, there may be additional LBWs coupling the outputs of LBCs of a preceding stage with the inputs of the LBCs of a subsequent stage, and there may also be a LBW coupling the final stage to the output of the combining unit.

In any of the combining units described herein, the single optical output of the combining unit 100 may be coupled to a single-mode optical fiber or may be coupled to a free-space output. Thus, the combining unit 100 may be adapted for a wide variety of applications, including those that transmit quantum information over a fiber optical channel and those that transmit quantum information over a free-space channel. The plurality of optical inputs may also be coupled to free-space inputs or fiber inputs. For example, the combiner inputs may be coupled to a light source via a fiber array (as to be described below) or coupled to a light source directly or via free-space optical links.

Outputting directly to free space after free space combination avoids any compensation for phase drift caused by a single mode output fiber. This makes the combining unit particularly of use in free space communication situations such as satellite communications.

In some embodiments, all inputs and the output of the coupling unit include fiber coupling components. As such, the entire combining unit may be a module in a modular assembly (with other modules including the light sources to be described below, as well as fiber optic cables forming a quantum communication channel, or other fiber optic outputs). Thus, the combing unit provides a "plug-and-play" system that is highly versatile and flexible in application.

The combining units described herein may be used in a method for combining a plurality of optical inputs into a single optical output. The method comprises: providing an optical input of the plurality of optical inputs to one of a plurality of LBWs; providing an output of the plurality of LBWs to at least one LBC, the inputs of the at least one LBC coupled to the plurality of LBWs and the output of the at least one LBC coupled to the single optical output.

Each combining unit is provided to receive light, and may be deployed as part of a QKD encoding apparatus. In a first set of embodiments, the combining unit comprises polarising elements, and is adapted to receive light pulses from a source. In this first set of embodiments, the combining unit is itself adapted to polarise the light into the desired polarisation basis prior to the light being input into the PIC. In a second set of embodiments the combining unit is adapted to receive light that is already polarised into the desired polarisation basis from a light source outputting the light in the desired polarisation basis.

In an example embodiment of the first set of embodiments, Figure 3 illustrates a combining unit 310 that includes a fiber array 320. The fiber array 320 is illustrated in combination with combining unit 110, but the fiber array may be added to any of the above-described combining units. The fiber array 320 comprises a plurality of polarisation maintaining optical fibers 320a-320d, hereafter PMFs. A first end of each PMF is coupled to an optical input of the plurality of optical inputs 120 of the combining unit 110. A second end of each PMF is coupled to a respective one of the plurality of LBWs of the PIC.

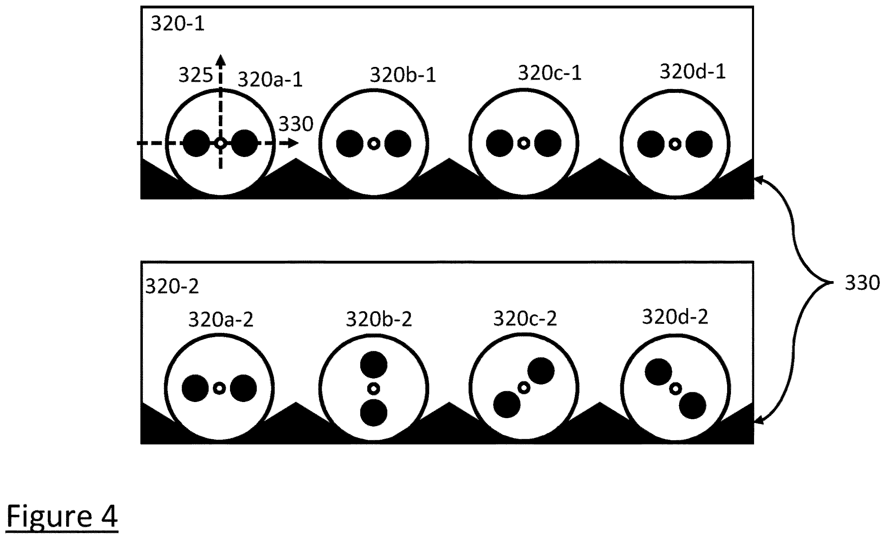

Figure 4 illustrates cross-sections of each fiber in the fiber array 320. The fiber array first end 320-1 shows cross sections 320a-1 to 320d-1 of the first ends of each optical fiber, and fiber array end 320-2 shows cross-sections 320a-2 to 320d-2 of the second ends of each optical fiber. Each PMF has a birefringence which allows two well defined polarisation modes which propagate along each fiber with difference velocities. As light propagates on the slow axis, the polarisation state does not vary with atmospheric conditions (such as temperature changes). Thus, each PMF comprises a fast optical axis 330 and a slow optical axis 325. There are many different types of polarisation maintaining fibers. The fiber may be geometrically asymmetric or have a refractive index profile which is asymmetric. Alternatively, stress may be permanently induced in the fiber to produce stress birefringence. This may be accomplished using rods of another material included within the cladding. Figure 3 shows the so-called "PANDA" type where there are two rods which produce stress birefringence around a central core. However, this is just an example and other types of fiber could be used (e.g. bow-tie type, or elliptical core).

The plurality of PMFs are arranged in an array such that each of the optical fiber first ends 320a-1 to 320d-1 have the same alignment of fast axes and slow axes. Each of the second ends of the plurality of PMFs are rotated with respect to one another by a non-zero angle. The rotation of the fiber causes the rotation of the slow axis of the fiber. The light propagates along the slow axis, to the mechanical rotation of the fiber results in a rotation of the polarisation state propagating within the fiber. Thus, the different polarisation states output by each fiber of the fiber array is a result of the rotation of the ends of the optical fibers. In the example of Figure 4, the optical fiber second ends are rotated to output polarisations at 0°, 90°, 45°, and 135° at second ends 320a-2, 320b-2, 320c-2 and 320d-2 respectively, to output polarisation states of H, V, D, AD.

In the above-described embodiments, because the light is polarised by means of geometrical orientation of the fibers, the output polarisation is not dependent upon the input wavelength, nor upon the temperature of the fiber (since the output polarisation is not dependent on the refractive index). This is in contrast to other forms of chip-based polarisation apparatuses and methods, which rely on amplitude mixing (i.e. interference). In these other forms of chip-based polarisation apparatuses, the final polarisation will dependent upon properties of the optical paths taken by the light being interfered to create the final polarised state. As such, the final polarisation may dependent upon path length difference and variations in refractive index in the chip-based components. Thus, the above-described embodiments utilising mechanically rotated PMFs provide for encoded polarisation states of higher stability. The mechanically rotated PMFs also mitigates the need for any active polarisation control during operation. The PICs are also independent of wavelength or temperature, so the assembled combiner system also provides higher polarisation state stability.

While fiber-based polarisation rotation will provide a more stable polarisation state, utilising fibers also for the coupling and combining of polarisation states requires a combining unit having a large footprint and weight, since the design would require additional lengths of fiber and fiber connectors to create the combining unit. The PIC is more compact than fiber based designs, significantly reducing the footprint of combining unit and thus the transmitter. Since the fiber array is only used for polarisation encoding, the length of fiber can be kept to a minimum (for example, a few millimetres). When combined with the chip-based light sources (to be described below), the overall multiplexing device can measure only a few centimetres.

The embodiments described herein that utilise the fiber array provide a balance of benefits by implementing both optical fibers and a PIC to obtain the benefits of polarisation stability of the fibers with the size benefits of the PIC. In addition, the low birefringence of the waveguides provides thermally independent polarisation states. This makes the transmitters described herein suited for deployment on a satellite node.

Furthermore, since the combining units described herein do not rely on free-space optics, but rather on fibers and PICs, the weight of the device can be reduced considerably, as bulky free-space combiners are not required.

The fiber array may be manufactured by affixing the plurality of optical fibers side-by-side within a respective plurality of grooves 330. For each optical fiber, the second end of each optical fiber is mechanically rotated to the above-defined rotation, and the optical fiber is placed within a groove of the fiber array assembly. The ends of the fiber array are then glued otherwise fixed in place.

In some embodiments, the transmitter 300 may further comprise a single-mode optical fiber 316 coupled to the output of the combining unit 110. In further embodiments, the transmitter 300 may further comprise one or more birefringent elements 318, where the one or more birefringent elements 318 are coupled to the output of the single-mode optical fiber 316. The one or more birefringent elements 318 may be used to correct errors or shift in polarisation in light resulting from propagation in the single-mode optical fiber. While the light pulse output from the combining unit may be of different polarisation, depending on the input light signal, each of these modes will travel through the same optical fiber 316 and thus the error/shift in polarisation imparted by the single-mode optical fiber 316 will affect different each light pulse output equally. The birefringent element may thus be configured to impart a polarisation shift that is opposite to a polarisation shift imparted by the single-mode optical fiber 316.

Figure 4 illustrates embodiments in which the plurality of optical inputs comprises four optical inputs and the plurality of PMFs include four PMFs. As described above, such embodiments may be provided for use in 4-state quantum key distribution protocols such as the BB84 protocol. However, it is understood that any number of optical fibers may be provided such that there is one optical fiber coupled to an optical input of the combining unit and to a LBW of the PIC. For example, three optical fibers may be used and coupled to the combining unit of Figure 3A, or eight optical fibers may be used and coupled to the combining unit of Figure 3B.

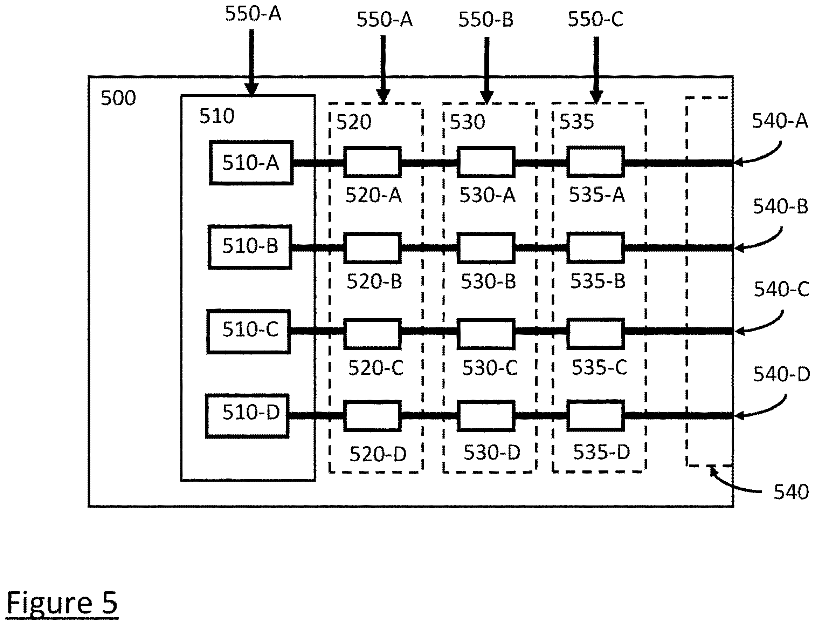

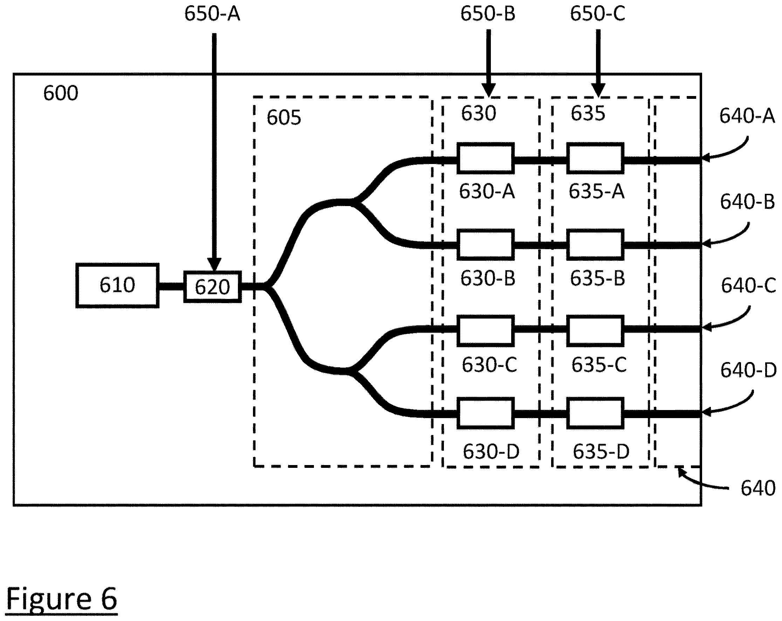

The combining unit 310 may be included as part of a transmitter 300. In these embodiments, the transmitter 300 includes a combining unit 310 with polarising elements configured to generate pulses in a desired polarisation basis (e.g. PMFs), and a light source 350 having a plurality of outputs. Figures 5 and 6 illustrate example embodiments of the light source 350. The light source 350 comprises an emitter/light generating element 360 such as a laser or an LED. Each output of the light source 350 is coupled to a respective PMF of the plurality of PMFs of the fiber array, and the light source is configured to output pulses of light at a first wavelength at each of the plurality of outputs. Producing pulses of the same wavelength at each of the plurality of outputs improves the indistinguishability of the pulses input into the polarising optics and the combining unit 310. The output of the light source 350 is generally polarized light pulses, with the each output of the light source coupled to a PM fiber such that the polarisation axis of the light pulse is aligned with the slow axis of the PM fiber.

As illustrated in Figure 5, the light source 500 comprises a plurality of emitters, which may be emitters of pulsed radiation. For example, each emitter may be a light-emitting diode (LED) or may be a laser, such as Vertical-Cavity Surface Emitting Laser (VCSEL) or a distributed feedback laser (DFB). The lasers may be chip-based lasers. Each laser corresponds to a combination of the intensity level and polarization (I,P). The laser outputs can be modulated using an RF signal which contains the information to be encoded. In this case, low power VCSELs can be used which can directly be driven using a Field Programmable Gate Array (FPGA). In some embodiments, the emitters may be configured to output pulsed radiation in a chosen polarisation basis. In these embodiments, the lasers may be polarised laser diodes, or LEDs combined with linear polarisation filters.

In the example of Figure 5, the light source 500 comprises a plurality of emitters, for example a plurality of lasers 520 fabricated on a chip, where each emitter of the plurality of emitters coupled to an output of the plurality of outputs of the light source 500. The light source may comprise driving electronics connected to each of the plurality of emitters and configured to selectively excite each laser to generate an output from the emitter. The driving electronics may comprise a FPGA and provide a high-speed signal to selectively excite each emitter. For example, the driving electronics include a laser driver which is implemented such that the emitters are gain-switched and therefore produce optical pulses with a random phase at each clock cycle. In an embodiment, the laser driver takes the digital signal from the FPGA and produces an analog output capable of driving the laser diodes or LEDs in gain-switched operation, turning the light source off completely between each pulse. Driving the light source in this way means that each pulse will have a random phase due to being seeded from a vacuum photon (spontaneous emission).

The output of the chip can have a similar pitch to that of the PM fiber array so that the chip can be glued onto the chip to couple each emitter to the respective PM fibers.

Each emitter may be tuned to produce a pulse of the same intensity and the same wavelength.

In some embodiments, the light source 500 further comprises a first plurality of intensity modulators 520, with each intensity modulator of the first plurality coupled to a respective emitter of the plurality of emitters. In the example of Figure 5, four intensity modulators 520-A to 520-D of the first plurality are shown, respectively coupled to emitters 510-A to 510-D. The light source 500 may further comprise a second plurality of intensity modulators 530, with each intensity modulator of the second plurality coupled to a respective intensity modulator of the first plurality of intensity modulators. In the example of Figure 5, four intensity modulators 530-A to 530-D of the second plurality are shown, respectively coupled to intensity modulators 520-A to 520-D. The light source may further comprise a plurality of phase modulators 535, with each phase modulator coupled to a respective intensity modulator of the second plurality of intensity modulators 530. In the example of Figure 5, four phase modulators 535-A to 535-D are shown, respectively coupled to intensity modulators 530-A to 530-B.

The first plurality of intensity modulators 520 are adapted to modulate the intensity of the outputs of the emitters 510 in response to a control signal provided to each of the intensity modulators (e.g. control signal 550-A).

The second plurality of intensity modulators 530 are adapted as "ON-OFF" switches to allow or prevent passage of light through the switching modulator in response to a control signal provided to each modulator (e.g. control signal 550-B).

The plurality of phase modulators 535 are adapted to modulate the phase of pulses from each emitter prior to being output from the light source outputs 540, in response to a control signal 550-C. Thus, the phase modulators may be used to correct phase errors of the light pulses.

The second plurality of intensity modulators 530 may be used in the encoding of a quantum bit stream in accordance with a QKD protocol. Each of the emitter outputs is coupled to a single input of the fiber array 320, such that the fiber array will output light of a different polarisation state for light produced from each emitter. By providing control signals to the plurality of switching modulators, the transmitting entity ("Alice") can choose which emitter of the plurality of emitters will be output to the fiber array 320 and thus can choose the polarisation of light pulses output to the combining unit 110. The transmitter 300 may thus generate a series of pulses at each of the plurality of emitters 510, and receive control signals at the plurality of modulators to randomly switch on a different single modulator in time with the pulses produced by the plurality of emitters. Thus, the output of the transmitter is a polarised pulse in a random one of the polarisation states provided by the fiber array 320.

The first plurality of intensity modulators 520 may be used in the implementation of a decoy state protocol of QKD. In some embodiments, the emitters generate multi-photon pulses to improve reliability and efficiency of the detector and thus the QKD protocol. However, such pulses may be susceptible to photon number splitting attacks. Further security can be provided by additionally randomly varying the intensity of the pulses produced by the transmitter, thus introducing varying photon statistics into the channel. By publicly announcing and monitoring pulse intensity levels, Alice and Bob will be able to detect a photon number splitting attack.

For example, the transmitter may be configured to employ the 2-state QKD decoy protocol, in which a random two-level control signal (e.g. RF signal) can be applied to each of the intensity modulators to choose either the signal state or the decoy state.

The illustrated order of the first and second pluralities of intensity modulators, and the phase modulators, is exemplary only and alternative ordering is possible. For example, the second plurality of intensity modulators may be provided before the first plurality of intensity modulators, and the plurality of phase modulators may be provided at the output of the plurality of emitters 510 or inbetween the first and second pluralities of intensity modulators 520 and 530. Furthermore, the intensity modulator of the first plurality and the intensity modulator of the second plurality for each emitter may be implemented as a single intensity modulator for each emitter, each single modulator performing both switching and intensity modulation functions. The pluralities of intensity modulators may use RF amplifiers, which have high power demands and are costly to produce. As an alternative to the first plurality of intensity modulators, the plurality of emitters themselves may be configured/tuned to output pulses at a required intensity. The control signals 550-A may thus be provided directly to emitters 510-A to 510-D, directly modulate the intensity of the emitter pulse to implement a decoy state protocol. Also as an alternative to the second plurality of intensity modulators, control signals 550-A may thus be provided directly to emitters 510-A to 510-D to directly and selectively switch the emitters ON/OFF to generate a stream of output pulses in selected states of the polarisation bases.

In accordance with further embodiments, a light source 600 is illustrated in Figure 6, which may form part of a transmitter 300. The light source 600 comprises a single emitter such as laser 610 coupled to the plurality of optical outputs 640 such that light generated by the emitter 610 may be output to one or more of the plurality of optical outputs 640. The light source 600 may comprise driving electronics connected to the emitter 610 and configured to selectively the emitter to generate an output from the emitter. The driving electronics may comprise a FPGA and provide a high-speed signal to selectively excite the emitter. For example, the driving electronics includes a laser driver which is implemented such that the emitter is gain-switched and therefore produce optical pulses with a random phase at each clock cycle. In an embodiment, the laser driver takes the digital signal from the FPGA and produces an analog output capable of driving the laser diode or LED in gain-switched operation, turning the light source off completely between each pulse. Driving the light source in this way means that each pulse will have a random phase due to being seeded from a vacuum photon (spontaneous emission).

The light source may comprise a beam splitting assembly 605 comprising one or more couplers. As illustrated in Figure 6, the splitting assembly may comprise a hierarchy of 2x1 beam combining units. The beam splitting assembly is adapted to receive a single optical input and output a plurality of optical outputs, each beam splitting assembly output corresponding to a respective one of the plurality of optical outputs 640 (e.g. 640-A to 640-D).

The light source 600 may further comprise a plurality of intensity modulators 630, each intensity modulator coupled to an output of the plurality of outputs and configured to transmit or block the output of light at the output in response to a control signal 650-B. The light source may also comprise an output intensity modulator 620 coupled to the output of the emitter 610 and configured to modulate an output of the emitter in response to a control signal 650-A. Since a single emitter 610 is coupled to a plurality of outputs via the beamsplitting assembly, only a single optical modulator 620 is required to modulate the intensity of outputs of each of the outputs of the light assembly.

The light source may further comprise a plurality of phase modulators 635, with each phase modulator coupled to a respective intensity modulator plurality of intensity modulators 630. The phase modulators are configured to control the phase of light pulses in response to a control signal 650-C. In the example of Figure 6, four phase modulators 635-A to 635-D are shown, respectively coupled to intensity modulators 630-A to 630-D. The illustrated order of the intensity modulators and the phase modulators is exemplary only and alternative ordering is possible. For example, the plurality of intensity modulators 630 may be provided after the plurality of phase modulators 635.

In some embodiments, the light source 600 includes a second emitter (e.g. a laser) coupled to the input of the intensity modulator 620 and may output light to the intensity modulator in place of emitter/laser 620. The second emitter is thus provided for redundancy.

The plurality of intensity modulators 630 may be used in the encoding of a quantum bit stream in accordance with a QKD protocol in the manner described above in connection with the second plurality of intensity modulators 530 of Figure 5. The plurality of phase modulators 635 may be used for phase error correction in the manner described above in connection with the phase modulators 535 of Figure 5. The single intensity modulator 620 may be used in the performance of a QKD decoy state protocol in a manner described above in connection with the first plurality of intensity modulators 520 of Figure 5 above. A single control signal 650-A may be applied to the intensity modulator 620 to randomise the intensity of the output pulse of the emitter, which is then provided to each of the switching modulators 630. Control signals 650-B are provided to randomly activate one of the switching modulators to select an output polarisation state.

In the light source 600 of Figure 6, a single emitter is provided. Since all optical outputs are sourced from the same emitter, the final output series of pulses have improved wavelength indisguishability between pulses (as compared to, for example, a plurality of emitters in which variations between the emitters may have an effect on the wavelengths of the pulses output by the light source). Through using only a single emitter (or two emitters with redundancy), the light source 600 is more compact and thus has a lower footprint. The use of a single laser also relaxes thermal stability requirements that might be in place for a plurality of lasers (i.e. to ensure consistent temperature across all lasers). The single emitter (and redundancy emitter when used) may generate pulses in a polarisation basis that is aligned with the slow axes of each fiber of the fiber array to which the light source 600 is coupled.

The transmitters described above may be used in a method of generating a polarisation encoded signal. The method comprises: generating a plurality of light pulses; directing the plurality of light pulses into a fiber array, the fiber array comprising a plurality of PMFs, wherein each PMF comprises a fast optical axis and a slow optical axis, wherein the plurality of PMFs are rotated with respect to one another by a non-zero angle, such that the fiber array outputs a plurality of polarised pulses; and combining the outputs of the plurality of PMFs according to the method described above in connection with Figures 1, 2A and 2B.

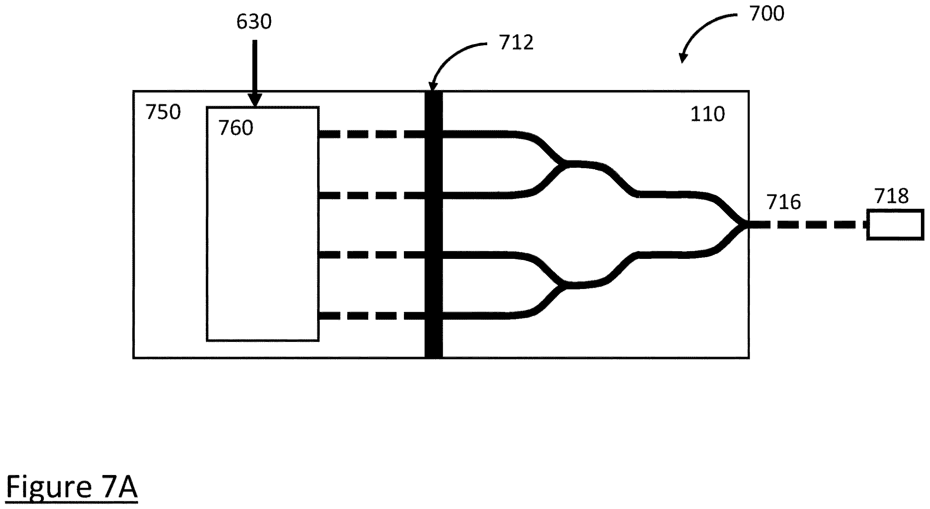

As mentioned above, in the second set of embodiments, in which the combining unit is coupled to a light source providing polarised light output. An example transmitter 700 in accordance with the second set of embodiments is illustrated in Figure 7A. The transmitter 700 comprises a combining unit 810. The combining unit may be any of the combining units described above in connection with Figures 1, 2A and 2B. The transmitter 700 further comprises a light source 750 having a plurality of optical outputs, each optical output coupled to an optical input of the plurality of optical inputs of the combining unit 110. The light source 750 is configured to output pulses of polarised light at a first wavelength at each of the plurality of outputs. Producing pulses of the same wavelength at each of the plurality of outputs improves the indistinguishability of the pulses input into the combining unit 810. In these embodiments, the light source may be edge coupled to the PIC such that each emitter output is coupled to an input of the PIC. The light source may be coupled by means of a coupling interface 712, which may include be expoy or other transparent adhesive, or may include a micro-lens array, a grating coupler or a free-space coupler.

In some embodiments, the light source 750 is configured to output light having a different polarisation at each optical output of the light source. For example, in the embodiment of four optical outputs, the outputs output light in each of the states of the H, V, A, D polarisation basis. The light source may comprise a plurality of laser sources, where each laser source is configured to generate polarised light. Alternatively, each laser source may be provided with a polarising element attached to the output.

The light source 760 may comprise a plurality of light generating elements, for example a plurality of lasers. Each light generating element may be coupled to a respective one of the plurality of optical outputs of the light source 750 to output light of a different polarisation at each output. For example, in some embodiments, the light source 750 may comprise the elements of the light source 500 described above in connection with Figure 5. In these embodiments, the lasers 510 are lasers that are configured to generate polarised light. Otherwise, the light source 750 may be provided with the same intensity modulating and switching functionality as described above in connection with light source 500. Thus, light source 750 may also be adapted for QKD encoding protocols and, optionally, QKD decoy state protocols.

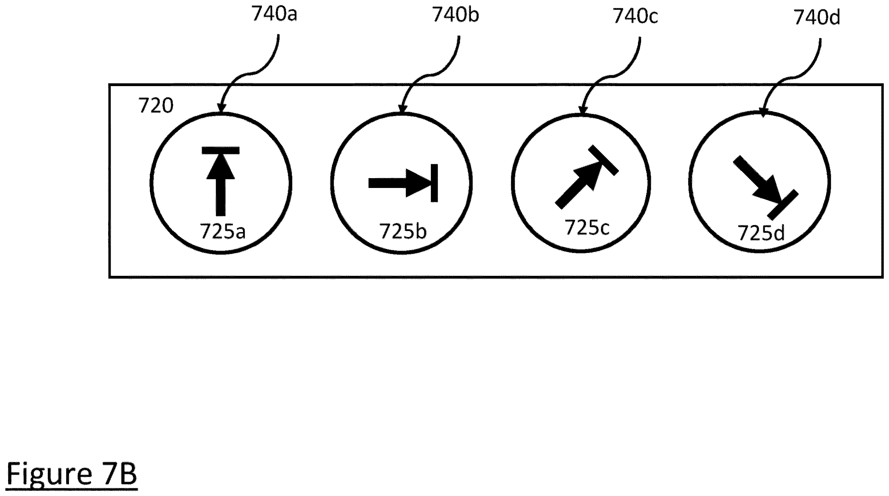

In example embodiments, the plurality of light sources are a plurality of VCSELs. VCSELs provide a high efficiency and fast operation, and are thus suited for generating optically encoded states. The plurality of VCSELs may be provided at the edge of light source 750 to output light from the edge. An example is illustrated in Figure 7B, which shows an edge 720 of the light source 750 in which is arranged the emitting surfaces of a plurality of VCSELs 725a-725d that act as the optical outputs 740a - 740d of the light source 750. To achieve the different polarization states, the VCSELs are physically oriented in 0°, 90°, -45° and 45° directions. The embodiment of Figure 7B is illustrative only, and it will be understood that more than four or fewer than four VSCELs may be provided, with one VSCEL provided for each optical output of the light source 750. The physical orientation of each VCSEL may additionally vary depending on which polarization basis is desired for the light of each optical output.

The edge 720 may be edge-coupled to the edge of the combining unit (including to the edge of the PIC). The edge-coupling may be made by an interface 712 (such as a micro lens array, grating coupler or other edge coupler). Alternatively, the interface may be a free-space imaging system to allow transmission of light from the light source through free-space. In such embodiments, the combining unit 110 coupled to the light source 750 may also include a free-space edge coupler to couple free-space input into the optical inputs of the combining unit.

The transmitter embodiments described above in connection with Figures 7A and 7B may be more compact, since polarizing elements are not required in the combining unit.

In some embodiments, transmitter 700 may further comprise a single-mode optical fiber 716 coupled to the output of the combining unit 110. In further embodiments, the transmitter 700 may further comprise one or more birefringent elements 718, where the one or more birefringent elements 718 are coupled to the output of the single-mode optical fiber 716. The one or more birefringent elements are configured to compensate for shifts in polarisation from the single-mode optical fiber 716 in the same manner as described above in connection with the one or more birefringent elements 318 of Figure 3.

In some examples of light sources 500, 600 and 750, more than one switching transistor can be activated at the same time, resulting in a plurality of optical outputs being input into the inputs of the combining unit simultaneously. Thus, the combining unit is configured to combine multiple polarised pulses into a single optical pulse. The combining unit can thus be used to perform amplitude multiplexing (i.e. interference) of different light pulses. In the examples using a plurality of emitters 510, each emitter may be separately driven by driving electronics to transmit a pulse of a desired phase and/or amplitude (and/or polarisation in the case of light source 750) for each laser that are then mixed by the combining unit. The amplitudes, phases and/or polarisations are chosen to generate a desired final output state.

In some embodiments, the light source 750 is configured to receive at least one control signal 630 to modulate the polarisation of the polarised light output at each of the plurality of outputs. For example, a control signal may be provided to each laser of the plurality of lasers generating the polarised light output from the light source 750. In this manner, the light source may be configurable to vary the polarisation bases of pulses to be encoded.

In some embodiments, the output of the light source 750 may be coupled to the combining unit 110 directly by attaching the light source directly to the combining unit to couple the light source outputs to the combining unit inputs, where the light source outputs and combining unit inputs are provided a same pitch to ensure alignment. In alternative embodiments, the light source and the combining unit may be coupled by a fiber array, comprising a plurality of single-mode optical fibers that maintain the polarisation between the light source and the combining unit. In other alternative embodiments, the light source and the combining unit may be coupled by free-space optical links.

The above-described transmitters may be used in a method of generating a polarisation encoded signal, comprising: generating a plurality of polarised light pulses and combining the polarised light pulses according to the method described above in connection with Figures 1, 2A and 2B.

For each of the above-described embodiments of transmitters including a light source, the light source may be configured to produces light pulses as a sequence of pulses. When the light source includes a plurality of lasers, each laser is configured to generate a sequence of pulses. When the light source includes a single laser, the laser is configured to generate a sequence of pulses. Each laser may be driven by a high-speed clock pulse. Each pulse may be encoded with a polarisation basis using the systems and methods described herein and provided to the combining unit. The combining unit output is thus a sequence of polarisation encoded pulses and may be used as a channel of quantum information.

In some embodiments, the light source produces light pulses having a mean photon number of < 1. Producing pulses with a low photon number reduces the vulnerability of the system to photon splitting attacks when operating as a QKD encoder.

The light source may be configured to generate pulses at a range of wavelengths, including within the range of wavelengths for telecoms applications (e.g. 1300nm - 1700nm), as well as near-infrared, infrared and visible light wavelength bands. In one embodiment, each laser generates pulses at 850nm, which demonstrates low absorption in free space and as such the transmitter is more efficient when utilising free-space optical links.

The above-described embodiments include combining units with a plurality of optical inputs of three, four or more. In some embodiments, the combining unit may comprise two optical inputs and a single optical output to form a 2x1 combining unit. In these embodiments, 2x1 combining unit includes two LBWs coupling the optical inputs of the combining unit to the inputs of a single 2x1 LBC, the output of which is coupled to an output of the PIC (optionally via another LBW). Such an embodiment of a 2x1 coupler may be useful for combining only two polarisation states in applications other than QKD. However, the system may still be useful in a QKD encoding scheme.

For example, the 2x1 combining unit may be configured such that each optical input is configured to receive different, orthogonal polarisation states (e.g. the "H" and "V" polarisation states), forming two states of a first basis. When pulses are received at each input at different times, the 2x1 combining unit is configured to output pulses in different states of the first basis at different times. When pulses are received at the same time in the two optical inputs, the pulses will combine to form a state in the third basis. For example, an input pulse of H polarisation and an input pulse of a V polarisation may be combined to form a "D" polarisation state.

Thus, the 2x1 combining unit may be employed as part of a transmitter configured as a quantum encoder. Such a transmitter includes a light source in accordance with any of the above-describe embodiments, where to encode a quantum state the control signal provided to the switching modulators control the switching modulators to transmit light from either optical output of the light source, or both optical outputs simultaneously. The intensity modulators also receive control signals to modulate the intensity of output pulses such that the pulses output in each polarisation state have the same intensity when exiting the combining unit.

While a 2x1 combining unit is more compact than the other combining units described herein, the production of a set of states for QKD encoding requires amplitude mixing of input wavelengths (i.e. interference), which is dependent upon the wavelength of the input light source. By contrast, having individual inputs of the combining unit dedicated to individual polarisation states means that amplitude mixing is not required to generate all require polarisation states for a communication protocol and the polarisations of the encoded states are not dependent on the wavelength of the light source and as such are more stable (for example, at least three optical inputs can be used for stable polarisation states for a QKD encoding application).

The above described components of the transmitter may be coupled together using filler or adhesive such as index matching epoxy that is transparent to the light propagating within the transmitter.

In some embodiments, the single optical output of the combining unit is coupled to an optical fiber, and thus no free-space optical coupling is not used. As such, critical alignment instability can be significantly reduced.

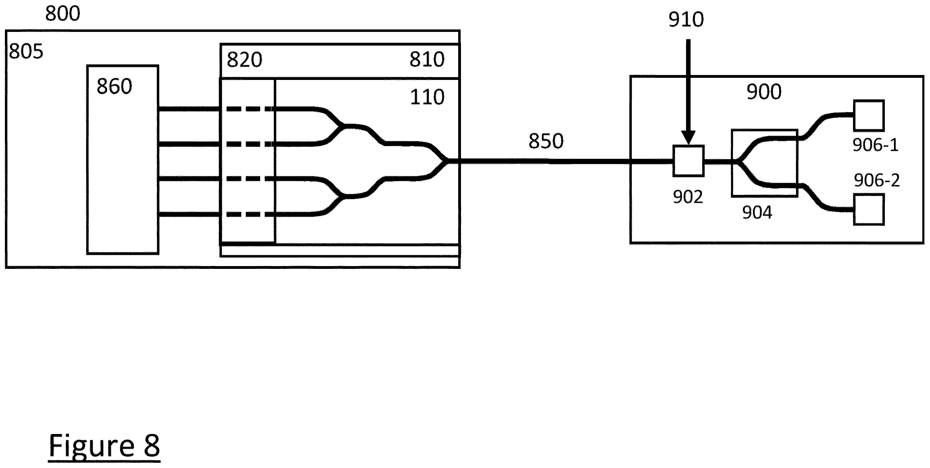

Embodiments of a quantum encoder system utilising a transmitter in accordance with the described embodiments are described below in connection with Figure 8.

Figure 8 shows a quantum communication system 800 that includes a quantum encoder 805 and a quantum decoder 900. The quantum encoder 805 may be a transmitter of any of the above-described embodiments. For example, Figure 8 illustrates the quantum encoder 805 may include the transmitter described above in connection with Figure 3, which includes the combining unit 810, fiber array 820 and light source 820 (which may be the light source 500 or 600). However, other transmitters described herein may form part of quantum encoder 805.

The quantum encoder is configured to generate optical pulses containing quantum encoded information (for example, a series of pulses encoded in the {H, V} basis or in the {D, A} basis). The quantum encoder 805 is connected to the quantum decoder 900 through communication channel 850. This communication channel may be, for example. a free-space optical channel or a fiber-optic channel. The quantum decoder 900 is configured to decode received light. Quantum decoder comprises a polarising beam splitter PBS 904, a polarisation controller 902, and detectors 904-1 and 904-2. In an embodiment, the PBS 904 is configured to split light into two orthogonal polarisation states (e.g. H and V). Polarisation controller 902 is configured to be switchable between two states, wherein in a first state the controller does not provide any polarisation rotation, and in a second state the controller provides a 45° rotation to switch incoming light from a first polarisation basis (e.g. {H,V}) to a second, orthonormal polarisation basis (e.g. {A, D}).

By switching the state of the polarisation controller, the receiver ("Bob") can change the basis in which the quantum decoder 900 is configured to measure incoming light.

The above systems may be used in a method of quantum communication, the method comprising: generating a polarisation encoded signal according to the method described above, wherein the polarised pulses output from the PMFs are randomly selected from states in two polarisation bases; receiving at a receiver the polarisation encoded signal; decoding the received polarisation encoded signals in a basis of the two polarisation bases.

The combining units and transmitters described herein may have further applications. For example, each transmitter may also be used as a transmitter for high-speed optical communication, or can be used a source for ultrafast Muller polarimetry, with a Muller matrix constructed from a plurality of generated polarised states. In some embodiments, timestamps may be generated by the transmitter for each generated polarised pulse that is used to create a Muller matrix.

Whilst certain embodiments have been described, these embodiments have been presented by way of example only, and are not intended to limit the scope of the inventions. Indeed, the novel devices, and methods described herein may be embodied in a variety of other forms; furthermore, various omissions, substitutions and changes in the form of the devices, methods and products described herein may be made without departing from the spirit of the inventions. The accompanying claims and their equivalents are intended to cover such forms or modifications as would fall within the scope and spirit of the inventions.

## Claims

1. A combining unit combining a plurality of optical inputs into a single optical output, the combining unit comprising:
a photonic integrated circuit comprising:
a plurality of low birefringence waveguides `LBW', each LBW coupled to an optical input of the plurality of optical inputs; and
at least one low birefringence coupler `LBC', coupled to the plurality of LBWs and coupled to the single optical output to combine optical signals received at the plurality of optical inputs into an output optical signal.

2. The combining unit of claim 1,
wherein the plurality of optical inputs comprises at least three optical inputs,
wherein the at least one LBC comprises a plurality of LBCs arranged in sequential coupling stages,
wherein the coupling stages comprise a final stage and at least one preceding stage, the final stage having an output LBC coupled to the single optical output and the at least one preceding stage having at least one LBC configured to combine a first input and a second input into a single LBC output coupled to an input of a following stage.

3. The combining unit of any preceding claim, further comprising a fiber array comprising:
a plurality of polarisation maintaining optical fibers, hereafter PMFs, each PMF being coupled to an optical input of the plurality of optical inputs of the combining unit;
wherein each PMF comprises a fast optical axis and a slow optical axis, wherein the plurality of PMFs are rotated with respect to one another by a non-zero angle,
wherein, optionally, the plurality of optical inputs comprises four optical inputs and the plurality of PMFs include four PMFs.

4. A transmitter, the transmitter comprising:
a combining unit according to claim 3; and
a light source having a plurality of outputs, each output coupled to a PMF of the fiber array, wherein the light source configured to output pulses light at a first wavelength at each of the plurality of outputs.

5. The transmitter of claim 4, wherein the light source comprises a plurality of lasers, each laser of the plurality of lasers coupled to an output of the plurality of outputs,
wherein, optionally, each laser of the plurality of lasers is configured to receive a control signal to modulate the intensity of the laser.

6. The transmitter of claim 4, wherein the light source comprises:
a laser;
an output intensity modulator coupled to the laser and configured to modulate an output of the laser;
a plurality of intensity modulators, each intensity modulator coupled to an output of the plurality of outputs and configured to transmit or block the output of light at the output in response to a control signal,
wherein, optionally, the light source further comprises a plurality of phase modulators, each phase modulator coupled to a respective intensity modulator of the plurality of intensity modulators and configured to adjust the phase of received light in response to a control signal.

7. A transmitter, the transmitter comprising:
a combining unit according to claim 1 or claim 2; and
a light source having a plurality of outputs, each output coupled to an optical input of the plurality of optical inputs,
wherein the light source configured to output pulses light at a first wavelength at each of the plurality of outputs,
wherein, optionally, the light source is configured to receive at least one control signal to modulate the polarisation of the polarised light output at each of the plurality of outputs.

8. The transmitter according to any one of claims 4-7, wherein the light source produces light pulses as a sequence of pulses; and/or
wherein the light source produces light pulses having a mean photon number of < 1.

9. The transmitter of any one of claims 4-8, wherein the single optical output of the combining unit is coupled to a free-space output, or
wherein the single-mode optical output is coupled a single-mode optical fiber and the transmitter optionally comprises one or more birefringent elements coupled to an output of the single-mode optical fiber.

10. A quantum encoder comprising the transmitter of any one of clams 4 - 9.

11. A quantum communication system comprising a quantum encoder according to claim 10 and a quantum decoder.

12. A method for combining a plurality of optical inputs into a single optical output, comprising:
providing an optical input of the plurality of optical inputs to one of a plurality of low birefringence waveguides, hereafter LBWs;
providing an output of the plurality of LBWs to at least one low birefringence coupler, hereafter LBC, the inputs of the at least one LBC coupled to the plurality of LBWs and the output of the at least one LBC coupled to the single optical output.

13. A method of generating a polarisation encoded signal, comprising:
generating a plurality of light pulses;
directing the plurality of light pulses into a fiber array, the fiber array comprising a plurality of polarisation maintaining optical fibers, hereafter PMFs, wherein each PMF comprises a fast optical axis and a slow optical axis, wherein the plurality of PMFs are rotated with respect to one another by a non-zero angle, such that the fiber array outputs a plurality of polarised pulses; and
combining the outputs of the plurality of PMFs according to the method of claim 12.

14. A method of generating a polarisation encoded signal, comprising:
generating a plurality of polarised light pulses;
combining the polarised light pulses according to the method of claim 12.

15. A method of quantum communication, comprising:
generating a polarisation encoded signal according to claim 13 or claim 14, wherein the polarised pulses output from the PMFs are randomly selected from states in two polarisation bases;
receiving at a receiver the polarisation encoded signal;
decoding the received polarisation encoded signals in a basis of the two polarisation bases.
